# EUROPEAN PATENT SPECIFICATION

(11) **EP 3 754 801 B1**
(45) Date of publication and mention of the grant of the patent: **08.03.2023**
(21) Application number: 19181797.2
(22) Date of filing: 21.06.2019
(51) Int. Cl.: H02B 1/56, H02B 13/02, H02B 13/035

(54) **SWITCHGEAR OR CONTROL GEAR**
SCHALTANLAGE ODER STEUERGERÄTE
APPAREILLAGE DE COMMUTATION OU DE COMMANDE

(43) Date of publication of application: 23.12.2020
(73) Proprietor: ABB Schweiz AG, 5400 Baden (CH)
(72) Inventor: Gentsch, Dietmar, 40882 Ratingen (DE); Javora, Radek, 664 62 Hrusovany u Brna (CZ); Cernohous, Josef, 561 65 Jamne nad Orlici (CZ); Skuci, Michal, 602 00 Brno (SK); Jerabek, Michal, 664 51 Slapanice (CZ); Stupak, Marcel, 613 00 Brno (CZ)
(74) Representative: Maiwald GmbH

(56) References cited:
- EP-A1- 0 543 352
- JP-A- S5 561 210
- JP-A- H10 270 880
- JP-A- 2001 112 127
- US-A1- 2017 149 217

## Description

### FIELD OF THE INVENTION

The present invention relates to a switchgear or control gear for low voltage, medium voltage or high voltage use with a substation.

### BACKGROUND OF THE INVENTION

EP0543352A1 describes that a switchboard comprises a plurality of bus bars as a power source, a plurality of electrical equipments and guide rails carrying at least one of said electrical equipments. A plurality of switchboard unit casings, which accommodate the respective electrical equipments, are attached to a common bus bar casing, which accommodates the bus bars, while permitting detachment therefrom. The bus bars extend horizontally and are disposed in the vertical direction with predetermined intervals. At least one of the switchboard unit casings accommodates a plurality of vacuum circuit breakers and a plurality of load side conductors to be connected to load side cables, first disconnecting switch units interconnecting the bus bars and the vacuum circuit breakers, and second disconnecting switch units interconnecting the vacuum circuit breakers and the load side conductors. The contact moving axes of the respective vacuum circuit breakers extend horizontally and in the depth direction of the switchboard unit casing, which direction is perpendicular to the extending direction of the bus bars. The vacuum circuit breakers are disposed vertically with predetermined intervals, and the load side conductors extend perpendicularly to the contact moving axes of the vacuum circuit breakers and in the vertical direction.

JPS5561210A relates to a closed switchboard. In order to store a plurality of electric devices independently, it has a unit chamber whose inside is divided into upper and lower parts, and an intake port is provided on one side surface of this unit chamber and this intake air is provided. An intake duct that guides the outside air from the mouth to the lower part of the electrical equipment is provided, and a vent that communicates the upper and lower parts is provided on the side of the partition plate between the units.

In state-of-art switchgear and control gear (also called controlgear) designs certain current carrying components, such as a circuit breaker (CB) or parts of a CB, are placed in one enclosure. This can lead to overheating of components that are placed above other components.

There is a need to address this issue.

### SUMMARY OF THE INVENTION

Therefore, it would be advantageous to have means to reduce overheating of components for a switchgear or control gear.

The object of the present invention is solved with the subject matter of the independent claim, which defines the invention and its scope of protection, and wherein further embodiments are incorporated in the dependent claims.

According to the invention, there is provided a switchgear or control gear as defined in appended claim 1.

According to the invention, there is provided a switchgear or control gear, comprising:
- a first compartment;
- a first phase;
- a second phase;
- a third phase; and
- at least one air leading device.

A circuit breaker "CB" pole of the first phase is housed in the first compartment. A CB pole of the second phase is housed in the first compartment. A CB pole of the third phase is housed in the first compartment. The CB pole of the second phase is located above the CB pole of the third phase. A first air leading device of the at least one air leading device is located between the CB pole of the second phase and the CB pole of the third phase.

In this manner, a switchgear or control gear has poles mounted above one another and air leading devices or means, such as plates, are positioned between the poles such that they direct the warm air, coming from components positioned below or between other components, up to the side of the switchgear or control gear wall. Also, the plates stop radiation energy from one pole from directly heating another pole, with this radiation being partially reflected and absorbed by the side walls of the compartment for example, or absorbed by the plates and re-emitted in all directions such that the overall radiative energy from one pole to another is reduced. In this way, the plates prevent the upper parts from excessive heating and improves overall temperature distribution within the switchgear or control gear.

According to the invention, the CB pole of the first phase is located above the CB pole of the second phase. A second air leading device of the at least one air leading device is located between the CB pole of the first phase and the CB pole of the second phase. Thus, for convenience of access and to save space, the poles are all mounted above each other, and efficient cooling is provided by directing rising warm air to the side walls where it is cooled.

In an example, the at least one air leading device is configured to direct rising gas and/or air toward at least one side wall of the first compartment.

In an example, not part of the invention, the first air leading device is configured to direct rising gas and/or air toward opposing side walls of the first compartment.

Thus, the air leading device can be designed having a lower surface that is for example like a roof of a house, but upturned, and this directs air to both side walls of the switchgear to facilitate cooling because more wall surface area is used to cool the rising air or gas.

According to the invention, the first air leading device is configured to direct rising gas and/or air toward a first side wall of the first compartment and the second air leading device is configured to direct rising gas and/or air toward a second opposing side wall of the first compartment.

In this manner, efficient cooling is provided, where both side walls can be utilized for cooling, but each air leading device, such as a plate, can be of a simple design as it only needs to direct air or gas in one direction.

In an example, a longitudinal axis of the CB pole of the second phase is substantially horizontal and a longitudinal axis of CB pole of the third phase is substantially parallel to the longitudinal axis of the CB pole of the second phase. A longitudinal axis of the first air leading device is substantially parallel to the longitudinal axis of the CB pole of the second phase.

In an example, at least one portion of the first air leading device is at an angle to the horizontal.

In an example, the at least one portion of the first air leading device at an angle to the horizontal is angled in an axial direction perpendicular its longitudinal axis.

In an example, a longitudinal axis of the CB pole of the first phase is substantially parallel to the longitudinal axis of the CB pole of the second phase. A longitudinal axis of the second air leading device is substantially parallel to the longitudinal axis of the CB pole of the second phase.

In an example, at least one portion of the second air leading device is at an angle to the horizontal.

In an example, the at least one portion of the second air leading device at an angle to the horizontal is angled in an axial direction perpendicular its longitudinal axis.

In an example, not part of the invention, the first air leading device has a same orientation to the second air leading device.

In an example, the first air leading device is angled to the second air leading device.

In an example, at least one outer surface of the at least one air leading device is ribbed.

In an example, the at least one air leading device comprises one or more conduits, and wherein the one or more conduits are in fluid connection with a cooling system.

### BRIEF DESCRIPTION OF THE DRAWINGS

Exemplary embodiments will be described in the following with reference to the following drawings:
Fig. 1 shows a schematic representation of an example of a switchgear or control gear;
Fig. 2 shows a schematic representation of airflow within a switchgear or control gear compartment;
Fig. 3 shows a schematic representation of an example of a switchgear or control gear with two air leading devices;
Fig. 4 shows schematic representation of three arrangements of air leading devices within a switchgear or control gear compartment with two air leading devices; and
Fig. 5 shows examples of two air leading device designs.

### DETAILED DESCRIPTION OF EMBODIMENTS

The following detailed description relates to switchgear or control gear for operation in a low voltage, medium voltage or high voltage substation. The specific switchgear or control gear discussed relate to a switchgear or control gear that has one or more removable modules or boxes, where components that become hot are orientated above one another. However, the switchgear or control gear described here, that reduces overheating of components, does not need to be one with such removable modules or boxes. Rather, the switchgear or control gear described here, that reduces overheating of components, only requires that components that become hot are oriented above one another.

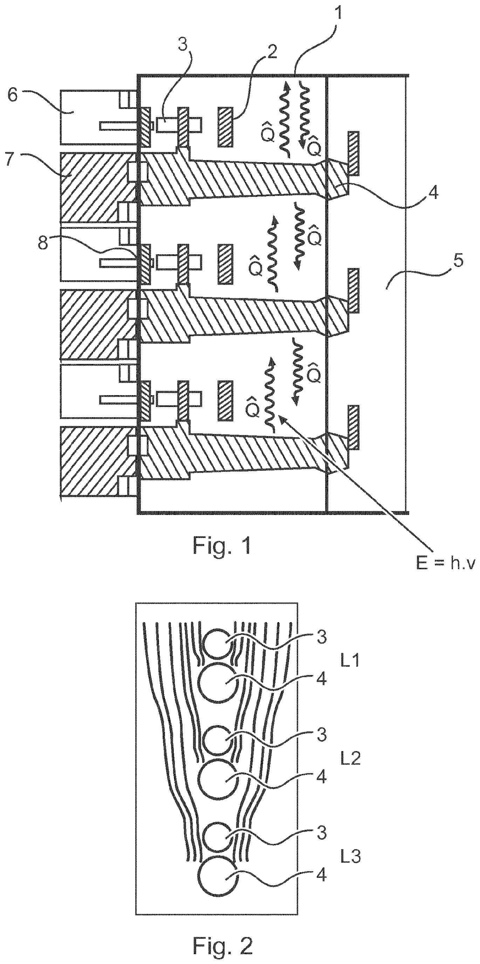

Fig. 1 shows an example of a three phase switchgear or control gear, where for ease of reference the following features shown are listed:
1 = Arc proof enclosure;
2 = Main busbar system;
3 = Three position disconnector switch;
4 = CB single pole + electromagnetic drive coil or motor + may contain also current and voltage sensors inside;
5 = Human operator accessible cable connection compartment - with removable cover and/or doors;
6 = Fixed module with disconnector drive and auxiliaries or removable module or box with plug and socket connection to power source and station communication bus;
7 = Fixed module with CB control electronics and auxiliaries or removable module or box with plug and socket connection to the CB drive and auxiliaries and with plug and socket connection to power source and station communication bus;
8 = Earthing copper bar

In this configuration, the phases are separated and arranged vertically in one plane. Warm air resulting from current flow and heating in lower parts or generally between parts of thee main switchgear compartment will flow naturally upwards. This is shown in more detail in Fig. 2, which shows the schematics of air flow within the main switchgear compartment. This arrangement inside of the switchgear, with such a configuration of current carrying parts, leads to excessive overheating of the phase/breaker pole or disconnector switch (e.g. phase L1) located at the top and creates a risk of operational compromise. Forced cooling can improve this situation, but adds costs, complexity and requires maintenance.

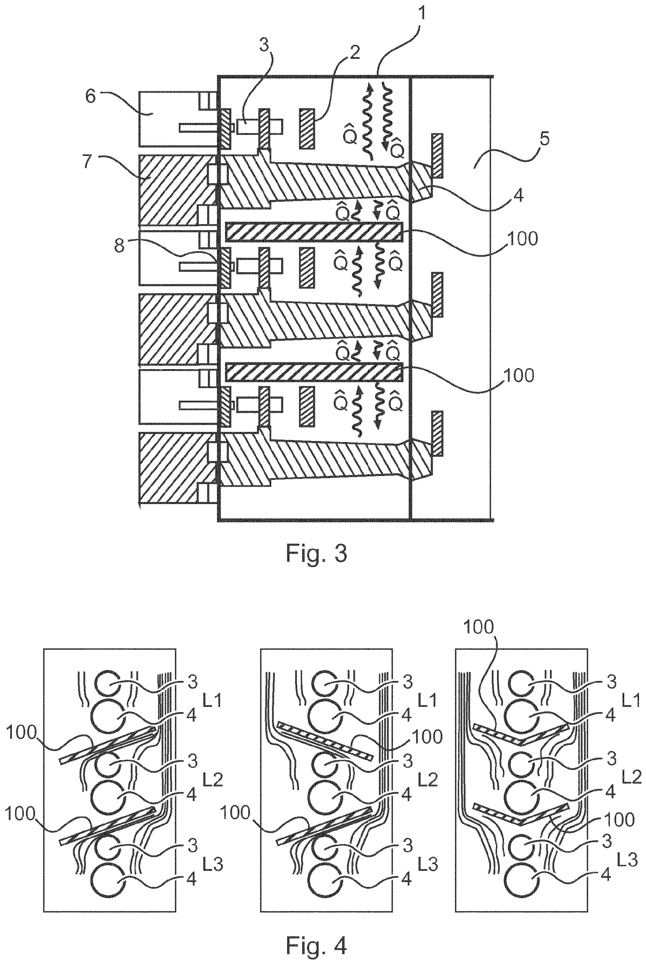

The switchgear or control gear for operation in a low voltage, medium voltage or high voltage substation decribed with respect to Figs. 3-5 addresses these issues. One example relates to a switchgear or control gear comprising a first compartment 1, a first phase L1, a second phase L2, a third phase L3, and at least one air leading device 100, such as a plate. A circuit breaker (CB) pole 4 of the first phase L1 is housed in the first compartment. A CB pole can also be called a single interruption unit. A CB pole 4 of the second phase L2 is housed in the first compartment. A CB pole 4 of the third phase L3 is housed in the first compartment. The CB pole 4 of the second phase L2 is located above the CB pole 4 of the third phase L3. A first air leading device of the at least one air leading device 100 is located between the CB pole 4 of the second phase L2 and the CB pole 4 of the third phase L3.

In an example, a three-position disconnector switch 3 of the first phase is housed in the first compartment, a three-position disconnector switch 3 of the second phase is housed in the first compartment, and a three-position disconnector switch 3 of the third phase is housed in the first compartment.

In an example, the three-position disconnector switch 3 of the second phase L2 is located above the three-position disconnector switch 3 of the third phase L3.

In an example, the first air leading device is located between the there-position switch 3 of the second phase L2 and the three-position disconnector switch 3 of the third phase L3.

In an example, the switchgear or control gear comprises at least one removable module 6, 7, a plurality of main switchgear or control gear components, and a plurality of auxiliary switchgear or control gear components. The plurality of main switchgear or control gear components are sub-divided into a first group of components and a second group of components. The plurality of auxiliary switchgear or control gear components are sub-divided into a first group of components and a second group of components. The plurality of main switchgear or control gear components in the first group of components and the plurality of auxiliary switchgear or control gear in the first group of components are housed in the first compartment. The plurality of main switchgear or control gear components in the second group of components and the plurality of auxiliary switchgear or control gear in the second group of components are housed in or associated with the at least one removable module. Removal of the at least one removable module from the switchgear or control gear is configured to remove the plurality of main switchgear or control gear components in the second group of components and the plurality of auxiliary switchgear or control gear in the second group of components from the switchgear or control gear. Thus, removal of the removable module allows or enables these components also to be removed from the switchgear of control gear.

The plurality of main switchgear or control gear components in the second group of components and the plurality of auxiliary switchgear or control gear in the second group of components being housed or associated with the removable module does not necessarily mean that these components are totally enclosed within the removable module. But, being housed or associated with the removable module means that removal of the removable module from the switchgear or control gear also removes those components that are housed or associated with the removable module from the switchgear or control gear.

In an example, the plurality of main switchgear or control gear components are sub-divided into the first group of components that have a lifetime greater than a threshold level and the second group of components that have a lifetime less than or equal to the threshold level.

In an example, the plurality of auxiliary switchgear or control gear components are sub-divided into the first group of components that have a lifetime greater than the threshold level and the second group of components that have a lifetime less than or equal to the threshold level.

The threshold for the main switchgear or control gear components can be the same as the threshold for the auxiliary switchgear or control gear components. The threshold can be determined in a number of different ways, for example being an average lifetime of components in the switchgear or control gear, or a time span equal to that between major scheduled system maintenance for example. Other time thresholds can be utilized.

The terms "have a lifetime greater than a threshold" and "have a lifetime less than or equal to a threshold" here relate to an expected lifetime, that can be determined from prior experimental knowledge of components or from data sheets for example.

In an example, the plurality of main switchgear or control gear components in the first group of components are fixedly housed in the first compartment.

In an example, the plurality of auxiliary switchgear or control gear in the first group of components are fixedly housed in the first compartment.

In an example, the plurality of main switchgear or control gear components in the second group of components and the plurality of auxiliary switchgear or control gear in the second group of components are divided into a plurality of logical groups, and wherein the components in a logical group are housed in or associated with the same removable module.

In an example, a disconnector switch drive and auxiliaries are housed in or associated with the same removable module 6.

In an example, the three-position disconnector switch 3 is a linear movement type switch or a rotational movement type switch.

In an example, a CB control electronics and auxiliaries are housed in or associated with the same removable module 7.

In an example, the disconnector switch drive and auxiliaries are housed in or associated with a different removable module to the removable module within which the CB control electronics and auxiliaries are housed or associated.

In an example, the removable module within which is housed or associated the CB control electronics and auxiliaries also houses or is associated with at least one part of a CB drive. An interface to a CB pole comprises a removable mechanical or electrical connection configured to transfer mechanical energy from the CB drive to a CB moving contact or electrical energy from the supply source to the CB drive.

In an example an electromagnetic drive or motor drive is provided, which is fixedly coupled to the CB pole. The coil windings of either of these drives then fall into the "First group of components". The energy storage capacitor and/or the drive control electronics then fall into the "second group of components". Thus an electrical interface is sufficient, through for example a plug in the cable from the drive controller to the motor as part of a plug and socket functionality.

In an example, for each CB pole a vacuum interrupter located in a central axis of the pole around the central axis is configured to act as a three position disconnector switch for connection, disconnection, and earthing.

In an example, each phase of three phases has a same logical group, and wherein the logical group for each phase is housed in or associated with a different removable module.

In an example, each phase of three phases has a same logical group, and wherein the logical group for each phase is housed in or associated with the same removable module.

In an example, the first compartment (main compartment) is arc proof.

In an example, each removable module of the at least one removable module comprises a plug and socket connection to supply and signal collection circuits, configured to enable communication with at least one component external to the removable module.

In an example, for at least one specific component of the components of the plurality of main switchgear or control gear components in the second group of components or the plurality of auxiliary switchgear or control gear in the second group of components, the at least one removable module comprises at least one plug and socket connection.

In an example, a plug and socket connection of the at least one plug and socket connection is configured for electrical connection between a CB drive electronics and a CB drive.

In an example, the switchgear or control gear comprises at least one cable connection compartment 5 within which is housed at least part of at least one cable connection for at least one vacuum interrupter housed in the first compartment.

In an example, at least one bushing forms part of the connection between the at least one cable connection and the at least one vacuum interrupter.

In an example, the at least one bushing comprises current and voltage sensors or parts of voltage indication system.

In an example, the at least one cable connection compartment comprises at least one door or removable wall section.

In an example, a segregating wall between the first compartment and the at least one cable connection compartment is an arc proof segregation, enabling access of a user to the cable connection compartment when at least one component in the first compartment is operational.

In an example, a different cable connection compartment is provided for each phase of three phases for a three phase system

In an example, the plurality of main switchgear or control gear components in the first group of components and the plurality of auxiliary switchgear or control gear in the first group of components comprises one or more of: copper bars of a primary circuit; a CB pole with a vacuum interrupter (single interruption unit); post insulators; current and voltage sensors; air leading devices; and disconnector fixed contacts..

In an example, the plurality of main switchgear or control gear components in the second group of components and the plurality of auxiliary switchgear or control gear in the second group of components comprises one or more of: electronic components for control and feedback collection; disconnector switch drive; CB control electronics; auxiliary switches; sensors for condition monitoring; cable terminations, and plug and socket systems.

The air leading devices can thus be removed, or the air leading devices can be fixedly mounted within the first compartment.

In an example, a primary circuit of the switchgear or control gear comprises one or more of: an earthing switch, voltage indication, surge arrestor, Ultra Fast Earthing Switch (UFES), IS-limiter (as invented by ABB Calor Emag in 1955), contactor, load-break switch, and fuse, and these components (and/or subcomponents of these components) when present are comprised within the second group of components of the plurality of main switchgear or control gear components or comprised within the second group of components of the plurality of auxiliary switchgear or control gear components.

In an example, the removable module is configured to be removed from the switchgear and replaced with a different removable module of the same type.

Thus, the main and auxiliary components of a switchgear or controlgear have been divided into two groups:
1. the components that show high reliability and thus do not require preventive maintenance (and only exceptionally require corrective maintenance) in the expected lifetime of the switchgear or controlgear (typically the copper bars of primary circuit, the CB pole and vacuum interrupter, the post insulators, the current and voltage sensors, the disconnector fixed contacts), and the air leading devices (if removable).
2. the components that are less reliable or have shorter lifetime than expected lifetime of the switchgear or controlgear (typically all the electronic components for control and feedback collection, auxiliary switches, sensors for condition monitoring, cable terminations and plug and socket systems).

The reliability of the components in the first group is increased through utilization of the air leading devices described here, where lifetime and reliability are increased as the temperature rise of these components is reduced.

The parts belonging to the first group can be designed as fixed (i.e. removable only with extra effort, tools or preparation) and not easily accessible for the maintenance systems or personnel - protected by the enclosure. The enclosure of the parts from the first group can be arc proof as it contains most of the primary circuit current carrying and insulating parts. But it does not have to be arc proof.

The components belonging to the second group can be further sub grouped to logical subassemblies and encapsulated into removable modules. For example, disconnector switch drive and auxiliaries can be enclosed into one module, while CB control electronics and auxiliaries can be enclosed into another module.

Each of these removable modules has a plug and socket connection to the supply and signal collection circuits allowing communication with the rest of the switchgear.

If electrical connection to the component associated with the removable module is needed, a plug and socket connection to this component can be provided as well (for example electrical connection between the CB control electronics and the CB drive).

The first step of any maintenance action on the parts from second group is by replacing the module with parts that require maintenance with a spare module of the same type. The switchgear then can stay in operation or the down-time of the affected part of the switchgear can be limited to a minimum. Meanwhile the maintenance action itself on the parts in the replaced module can be postponed to a most suitable time and does not have to be carried out urgently.

The components from the second group that cannot be easily encapsulated to the removable module and equipped with the plug and socket system (for example power cable terminations) are located in a separate compartment. This compartment shall be preferably segregated with arc proof segregation from the inner room of the switchgear, and is separate for each feeder circuit and is accessible for human operators or maintainers. When all covers are properly closed this compartment is preferably arc proof and enclosed against the inner room of the switchgear as well as the outer space.

The removable modules for the disconnector switch and the CB can be designed for each phase separately. These modules can however be designed as one module per all three phases or the three separate modules of the CB could be externally mechanically linked by e.g. toothbelt.

In an example, a separate removable module is provided for the disconnector switch and for the CB. These modules can however be designed as one module for both the devices.

The CB poles (single interruption units) can include the current and voltage sensors. The sensors in a bushing can be a separate component connected to CB pole with a removable connection. Rather than having the sensors embedded into a bushing that is separate from the pole, the current and voltage sensors can be kept as stand alone devices located in the cable compartment and not integrated in the bushing.

The disconnector switch is a linear movement type. A disconnector switch with rotational movement can be used as well.

The removable module of the CB shown includes the control electronics and auxiliaries and allows simple electrical plug and socket connection to the CB drive. However, the module can also include parts of the CB drive and then the interface to the CB pole can be a removable mechanical connection transferring mechanical energy from the drive to the CB moving contact. The removable module can comprise the complete CB single pole unit (the pole including drive and auxiliaries). For that purpose it would be possible to use a rotational CB pole. The vacuum interrupter located in the central axis of the pole is then used for current interruption, while rotation of the pole around the central axis serves for connection, disconnection and earthing as three position disconnector switch.

It is to be noted that a removable cover of the cable termination compartment can be replaced with doors.

The primary circuit of the switchgear or control gear can include other components and devices not described. The concept of separation of less reliable or shorter lifetime parts is applied to these components in that case.

The removable module of the disconnector switch can embed the drive and auxiliaries only, or it can include the moving contact of the disconnector switch in as well.

According to an example, the CB pole 4 of the first phase L1 is located above the CB pole 4 of the second phase L2. A second air leading device of the at least one air leading device 100 is located between the CB pole 4 of the first phase L1 and the CB pole 4 of the second phase L2.

In an example, the three-position disconnector switch 3 of the first phase L1 is located above the three-position disconnector switch 3 of the second phase L2.

In an example, the second air leading device of the at least one air leading device is located between the three-position disconnector switch 3 of the first phase L1 and the three-position disconnector switch 3 of the second phase L2.

According to an example, the at least one air leading device is configured to direct rising gas and/or air toward at least one side wall of the first compartment.

According to an example, not covered by the invention, the first air leading device is configured to direct rising gas and/or air toward opposing side walls of the first compartment.

According to an example, the first air leading device is configured to direct rising gas and/or air toward a first side wall of the first compartment and the second air leading device is configured to direct rising gas and/or air toward a second opposing side wall of the first compartment.

According to an example, a longitudinal axis of the CB pole of the second phase is substantially horizontal and a longitudinal axis of CB pole of the third phase is substantially parallel to the longitudinal axis of the CB pole of the second phase. A longitudinal axis of the first air leading device is substantially parallel to the longitudinal axis of the CB pole of the second phase.

According to an example, at least one portion of the first air leading device is at an angle to the horizontal.

According to an example, the at least one portion of the first air leading device at an angle to the horizontal is angled in an axial direction perpendicular its longitudinal axis.

According to an example, a longitudinal axis of the CB pole of the first phase is substantially parallel to the longitudinal axis of the CB pole of the second phase. A longitudinal axis of the second air leading device is substantially parallel to the longitudinal axis of the CB pole of the second phase.

According to an example, at least one portion of the second air leading device is at an angle to the horizontal.

According to an example, the at least one portion of the second air leading device at an angle to the horizontal is angled in an axial direction perpendicular its longitudinal axis.

According to an example, not part of the invention, the first air leading device has a same orientation to the second air leading device.

According to an example, the first air leading device is angled to the second air leading device.

According to an example, at least one outer surface of the at least one air leading device is ribbed.

According to an example, the at least one air leading device comprises one or more conduits, and wherein the one or more conduits are in fluid connection with a cooling system.

In an example, the air leading devices of the at least one air leading device are air leading plates.

In an example, the air leading device 100, such as a plate, has a length along longitudinal axis of a CB pole 4 that at least covers a distance from an earthing contact to the power incoming contact of the disconnector switch 3.

In this manner, the air leading device, or plate, is located at the hottest area between the pole and disconnector. In other words, the air leading device, or plate, does not necessarily need to be as long as the pole within the main compartment, rather it can provide for heat mitigation effects when it is as long as the disconnector within the main compartment.

Thus, a new substation development is provided where air leading devices, such as plates, are used between the poles. These are designed and positioned such that they direct the warm air, coming from components positioned below or between other components, up to the side of switchgear wall. In this way, use of the plates prevents the upper parts from excessive heating and improves overall temperature distribution within the switchgear or control gear.

Continuing with Figs. 3-5, Fig. 3 shows a side view cross-section of the switchgear panel with air leading means or devices, with Fig. 4 showing the back view into the main compartment, with three possible arrangements of the air leading devices shown.

As shown, the new development enables passive cooling of this switchgear (or control gear) configuration through a special arrangement inside of the switchgear, such that air flow from lower positioned parts or between parts is directed by air leading means to the side of the parts located above.

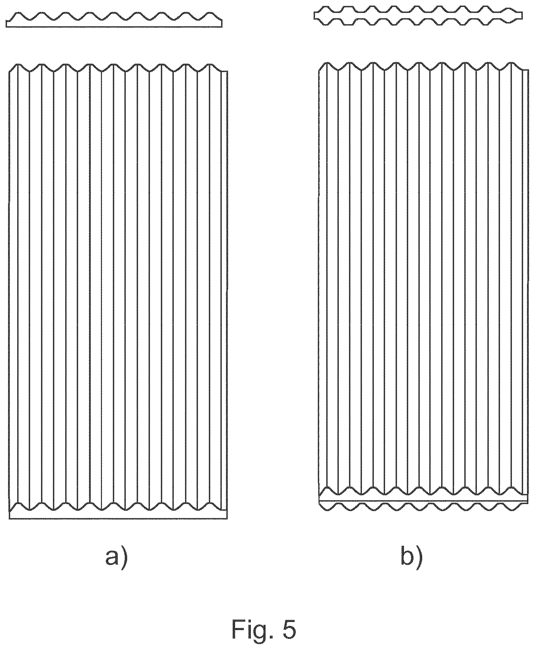

As shown in Figs. 3-4, the air leading devices or means 100 are located under the upper two poles/breakers, with a side inclination. The three-posiiton disconnector switches 3 and the CB pole 4 (which can also included an electromagnetic drive coil and current and voltage sensors) in each phase will not directly "see" the same parts 3 and 4 in other phases. Thus heat radiation from lower parts will go into the air leading plate 100. De-warming then takes place from the air leading plate, Also, depending on its design and use, the air leading plate can direct the air flow into a desired direction, nevertheless it can serve for other purposes as well as improving some other switchgear parameters. The surface of air leading plate can have longitudinal ribs, and in this way an enlarged area of the plate can serve also as a cooler itself. Longitudinal ribs can be on one side of the plate only, or also on both sides, as shwown in Fig.5, where examples of such surface designs are presented.

To improve the cooling effect, the air leading plates can be also elongated outside of the main panel area or even have internal tubes to enable the flow of a cooling medium from a connected separate cooling system located outside of the main panel area.

Best results of heat absorption could be achieved by using black thermally conductive material. Furthermore, in case the air leading plate is made of electrically insulating material, it can further improve dielectric field stress between phases or enable shortening distance between phases.

## Claims

1. A switchgear or control gear, comprising:
- a first compartment (1);
- a first phase (L1);
- a second phase (L2);
- a third phase (L3); and
- at least one air leading device (100);
wherein, a circuit breaker pole (4) of the first phase (L1) is housed in the first compartment;
wherein, a circuit breaker pole (4) of the second phase (L2) is housed in the first compartment;
wherein, a circuit breaker pole (4) of the third phase (L3) is housed in the first compartment;
wherein the circuit breaker pole (4) of the first phase (L1) is located above the circuit breaker pole (4) of the second phase (L2);
wherein, the circuit breaker pole (4) of the second phase (L2) is located above the circuit breaker pole (4) of the third phase (L3);
wherein, a first air leading device of the at least one air leading device is located between the circuit breaker pole (4) of the second phase (L2) and the circuit breaker pole (4) of the third phase (L3);
wherein a second air leading device of the at least one air leading device is located between the circuit breaker pole (4) of the first phase (L1) and the circuit breaker pole (4) of the second phase (L2); and
wherein the first air leading device is configured to direct rising gas and/or air toward a first side wall of the first compartment and the second air leading device is configured to direct rising gas and/or air toward a second opposing side wall of the first compartment.

2. Switchgear or control gear according to claim 1, wherein a longitudinal axis of the circuit breaker pole of the second phase is substantially horizontal and a longitudinal axis of circuit breaker pole of the third phase is substantially parallel to the longitudinal axis of the circuit breaker pole of the second phase, and wherein a longitudinal axis of the first air leading device is substantially parallel to the longitudinal axis of the circuit breaker pole of the second phase.

3. Switchgear or control gear according to any of claims 1-2, wherein at least one portion of the first air leading device is at an angle to the horizontal.

4. Switchgear or control gear according to claim 3 when dependent upon claim 2, wherein the at least one portion of the first air leading device at an angle to the horizontal is angled in an axial direction perpendicular its longitudinal axis.

5. Switchgear or control gear according to any of claims 1-4, wherein a longitudinal axis of the circuit breaker pole of the first phase is substantially parallel to the longitudinal axis of the circuit breaker pole of the second phase, and wherein a longitudinal axis of the second air leading device is substantially parallel to the longitudinal axis of the circuit breaker pole of the second phase.

6. Switchgear or control gear according to any of claims 1-5, wherein at least one portion of the second air leading device is at an angle to the horizontal.

7. Switchgear or control gear according to claim 6 when dependent upon claim 5, wherein the at least one portion of the second air leading device at an angle to the horizontal is angled in an axial direction perpendicular its longitudinal axis.

8. Switchgear or control gear according to any of claims 1-7, wherein the first air leading device is angled to the second air leading device.

9. Switchgear or control gear according to any of claims 1-8, wherein at least one outer surface of the at least one air leading device is ribbed.

10. Switchgear or control gear according to any of claims 1-9, wherein the at least one air leading device comprises one or more conduits, and wherein the one or more conduits are in fluid connection with a cooling system.

## Patentansprüche

1. Schaltanlage oder Steueranlage, umfassend:
- ein erstes Fach (1);
- eine erste Phase (L1);
- eine zweite Phase (L2);
- eine dritte Phase (L3); und
- mindestens eine Luftleitvorrichtung (100);
wobei ein Leistungsschalterpol (4) der ersten Phase (L1) in dem ersten Fach untergebracht ist;
wobei ein Leistungsschalterpol (4) der zweiten Phase (L2) in dem ersten Fach untergebracht ist;
wobei ein Leistungsschalterpol (4) der dritten Phase (L3) in dem ersten Fach untergebracht ist;
wobei der Leistungsschalterpol (4) der ersten Phase (L1) über dem Leistungsschalterpol (4) der zweiten Phase (L2) angeordnet ist;
wobei der Leistungsschalterpol (4) der zweiten Phase (L2) über dem Leistungsschalterpol (4) der dritten Phase (L3) angeordnet ist;
wobei eine erste Luftleitvorrichtung der mindestens einen Luftleitvorrichtung zwischen dem Leistungsschalterpol (4) der zweiten Phase (L2) und dem Leistungsschalterpol (4) der dritten Phase (L3) angeordnet ist;
wobei eine zweite Luftleitvorrichtung der mindestens einen Luftleitvorrichtung zwischen dem Leistungsschalterpol (4) der ersten Phase (L1) und dem Leistungsschalterpol (4) der zweiten Phase (L2) angeordnet ist; und
wobei die erste Luftleitvorrichtung dazu konfiguriert ist, aufsteigende(s) Gas und/oder Luft zu einer ersten Seitenwand des ersten Fachs zu leiten, und die zweite Luftleitvorrichtung dazu konfiguriert ist, aufsteigende(s) Gas und/oder Luft zu einer zweiten, gegenüberliegenden Seitenwand des ersten Fachs zu leiten.

2. Schaltanlage oder Steueranlage nach Anspruch 1, wobei eine Längsachse des Leistungsschalterpols der zweiten Phase im Wesentlichen horizontal ist und eine Längsachse des Leistungsschalterpols der dritten Phase im Wesentlichen parallel zur Längsachse des Leistungsschalterpols der zweiten Phase ist, und wobei eine Längsachse der ersten Luftleitvorrichtung im Wesentlichen parallel zur Längsachse des Leistungsschalterpols der zweiten Phase ist.

3. Schaltanlage oder Steueranlage nach einem der Ansprüche 1-2, wobei mindestens ein Abschnitt der ersten Luftleitvorrichtung in einem Winkel zur Horizontalen angeordnet ist.

4. Schaltanlage oder Steueranlage nach Anspruch 3, falls von Anspruch 2 abhängig, wobei der mindestens eine Abschnitt der ersten Luftleitvorrichtung in einem Winkel zur Horizontalen in einer axialen Richtung senkrecht zu ihrer Längsachse abgewinkelt ist.

5. Schaltanlage oder Steueranlage nach einem der Ansprüche 1-4, wobei eine Längsachse des Leistungsschalterpols der ersten Phase im Wesentlichen parallel zur Längsachse des Leistungsschalterpols der zweiten Phase ist, und wobei eine Längsachse der zweiten Luftleitvorrichtung im Wesentlichen parallel zur Längsachse des Leistungsschalterpols der zweiten Phase ist.

6. Schaltanlage oder Steueranlage nach einem der Ansprüche 1-5, wobei mindestens ein Abschnitt der zweiten Luftleitvorrichtung in einem Winkel zur Horizontalen angeordnet ist.

7. Schaltanlage oder Steueranlage nach Anspruch 6, falls von Anspruch 5 abhängig, wobei der mindestens eine Abschnitt der zweiten Luftleitvorrichtung in einem Winkel zur Horizontalen in einer axialen Richtung senkrecht zu ihrer Längsachse abgewinkelt ist.

8. Schaltanlage oder Steueranlage nach einem der Ansprüche 1-7, wobei die erste Luftleitvorrichtung in einem Winkel zur zweiten Luftleitvorrichtung angeordnet ist.

9. Schaltanlage oder Steueranlage nach einem der Ansprüche 1-8, wobei mindestens eine Außenoberfläche der mindestens einen Luftleitvorrichtung gerippt ist.

10. Schaltanlage oder Steueranlage nach einem der Ansprüche 1-9, wobei die mindestens eine Luftleitvorrichtung eine oder mehrere Leitungen umfasst und wobei die eine oder die mehreren Leitungen in Fluidverbindung mit einem Kühlsystem stehen.

## Revendications

1. Appareillage de contrôle ou de commande, comprenant :
- un premier compartiment (1) ;
- une première phase (L1) ;
- une seconde phase (L2) ;
- une troisième phase (L3) ; et
- au moins un dispositif de guidage d'air (100) ;
dans lequel, un pôle de disjoncteur (4) de la première phase (L1) est logé dans le premier compartiment ;
dans lequel, un pôle de disjoncteur (4) de la seconde phase (L2) est logé dans le premier compartiment ;
dans lequel, un pôle de disjoncteur (4) de la troisième phase (L3) est logé dans le premier compartiment ;
dans lequel le pôle de disjoncteur (4) de la première phase (L1) est situé au-dessus du pôle de disjoncteur (4) de la seconde phase (L2) ;
dans lequel, le pôle de disjoncteur (4) de la seconde phase (L2) est situé au-dessus du pôle de disjoncteur (4) de la troisième phase (L3) ;
dans lequel, un premier dispositif de guidage d'air de l'au moins un dispositif de guidage d'air est situé entre le pôle de disjoncteur (4) de la seconde phase (L2) et le pôle de disjoncteur (4) de la troisième phase (L3) ;
dans lequel un second dispositif de guidage d'air de l'au moins un dispositif de guidage d'air est situé entre le pôle de disjoncteur (4) de la première phase (L1) et le pôle de disjoncteur (4) de la seconde phase (L2) ; et
dans lequel le premier dispositif de guidage d'air est configuré pour diriger du gaz et/ou de l'air montant vers une première paroi latérale du premier compartiment et le second dispositif de guidage d'air est configuré pour diriger du gaz et/ou de l'air montant vers une seconde paroi latérale opposée du premier compartiment.

2. Appareillage de contrôle ou de commutation selon la revendication 1, dans lequel un axe longitudinal du pôle de disjoncteur de la seconde phase est sensiblement horizontal et un axe longitudinal du pôle de disjoncteur de la troisième phase est sensiblement parallèle à l'axe longitudinal du pôle de disjoncteur de la seconde phase, et dans lequel un axe longitudinal du premier dispositif de guidage d'air est sensiblement parallèle à l'axe longitudinal du pôle de disjoncteur de la seconde phase.

3. Appareillage de contrôle ou de commutation selon l'une quelconque des revendications 1 à 2, dans lequel au moins une partie du premier dispositif de guidage d'air est à un angle par rapport à l'horizontale.

4. Appareillage de contrôle ou de commutation selon la revendication 3 lorsqu'elle est dépendante de la revendication 2, dans lequel l'au moins une partie du premier dispositif de guidage d'air à un angle par rapport à l'horizontale est inclinée dans une direction axiale perpendiculairement à son axe longitudinal.

5. Appareillage de contrôle ou de commutation selon l'une quelconque des revendications 1 à 4, dans lequel un axe longitudinal du pôle de disjoncteur de la première phase est sensiblement parallèle à l'axe longitudinal du pôle de disjoncteur de la seconde phase, et dans lequel un axe longitudinal du second dispositif de guidage d'air est sensiblement parallèle à l'axe longitudinal du pôle de disjoncteur de la seconde phase.

6. Appareillage de contrôle ou de commutation selon l'une quelconque des revendications 1 à 5, dans lequel au moins une partie du second dispositif de guidage d'air est à un angle par rapport à l'horizontale.

7. Appareillage de contrôle ou de commutation selon la revendication 6 lorsqu'elle est dépendante de la revendication 5, dans lequel l'au moins une partie du second dispositif de guidage d'air à un angle par rapport à l'horizontale est inclinée dans une direction axiale perpendiculairement à son axe longitudinal.

8. Appareillage de contrôle ou de commutation selon l'une quelconque des revendications 1 à 7, dans lequel le premier dispositif de guidage d'air est incliné par rapport au second dispositif de guidage d'air.

9. Appareillage de contrôle ou de commutation selon l'une quelconque des revendications 1 à 8, dans lequel au moins une surface externe de l'au moins un dispositif de guidage d'air est nervurée.

10. Appareillage de contrôle ou de commutation selon l'une quelconque des revendications 1 à 9, dans lequel l'au moins un dispositif de guidage d'air comprend un ou plusieurs conduits, et dans lequel les un ou plusieurs conduits sont en connexion fluidique avec un système de refroidissement.
